# EUROPÄISCHE PATENTANMELDUNG

(11) **EP 4 825 502 A1**
(43) Veröffentlichungstag der Anmeldung: **21.10.2026**
(21) Anmeldenummer: 26168414.6
(22) Anmeldetag: 27.03.2026
(51) Int. Cl.: B07C 5/34, B07C 5/344, B65B 57/14, B65B 57/20, G01J 5/48, G01N 21/84

(54) **VERFAHREN ZUM ERFASSEN EINER ANZAHL AN GRUPPIERTEN PRODUKTEN UND VORRICHTUNG DAFÜR**

(30) Priorität: 17.04.2025 DE 102025115096
(71) Anmelder: OPTIMA nonwovens GmbH, 74523 Schwäbisch Hall (DE)
(72) Erfinder: Ohling, Kai-Uwe, 74523 Schwäbisch Hall (DE)
(74) Vertreter: Patentanwälte Ruff, Wilhelm, Beier, Dauster & Partner mbB

(57) **Zusammenfassung**

Die Erfindung betrifft ein Verfahren zum Erfassen einer Anzahl an gruppierten Produkten (10), z.B. Windeln, welche entlang einer Transportstrecke (9) transportiert werden. Die Erfindung betrifft weiter eine Vorrichtung (100) zur Ausführung des Verfahrens und ein System (1000) zum Verpacken von Produkten (1) mit einer Verpackungsmaschine zum Gruppieren und Verpacken der Produkte (1) und einer solchen Vorrichtung (100).

Es wurde erkannt, dass zu verpackende Produkte (1) durch Ihren vorangehenden Herstellprozess eine Restwärme besitzen und erfindungsgemäß vorteilhaft die Wärmestrahlung der Produkte (1) nach ihrer Gruppierung zur Bestimmung ihrer Anzahl erfasst und ausgewertet werden kann, z.B. unter Zuhilfenahme einer Wärmebildkamera (3).

## Beschreibung

Die Erfindung betrifft ein Verfahren zum Erfassen einer Anzahl an gruppierten Produkten, welche entlang einer Transportstrecke transportiert werden. Die Erfindung betrifft weiter eine Vorrichtung zur Ausführung des Verfahrens und ein System zum Verpacken von Produkten mit einer Verpackungsmaschine zum Gruppieren und Verpacken der Produkte und einer solchen Vorrichtung.

### STAND DER TECHNIK

Bei Produktverpackungen, welche eine Mehrzahl von Produkten enthalten, werden diese mit im Stand der Technik bekannten Verpackungsmaschinen in Verpackungen eingeführt und die Verpackungen danach verschlossen.

Dabei sind unterschiedlichste Verpackungen wie z.B. Schachteln, Dosen oder Beutel aus unterschiedlichsten Materialien wie z.B. Papier, Pappe, Kunststoff in Verwendung.

Handelt es sich bei den Produkten um Elemente mit geringer Eigenstabilität, so erfordert deren Handhabung während dem Prozess des Verpackens eine Vielzahl von speziellen Vorkehrungen.

Aus der EP 0 400 598 B1 geht eine Verpackungsmaschine zum Verpacken komprimierter Gegenstände hervor, nämlich von Windeln. Dabei wird ein Stapel von Windeln, also eine Anzahl an gruppierten Windeln, durch Pressen der Breitseiten der jeweils ersten und letzten Windel komprimiert, der Stapel komprimierter Windeln seitlich in komprimiertem Zustand in einen Verpackungsbeutel eingeschoben und der Beutel dann verschlossen.

In der modernen Fertigungs- und Verpackungsindustrie ist die Überprüfung der Vollständigkeit von verpackten Produkten essenziell, um die Produktqualität zu gewährleisten und Kundenbeschwerden zu vermeiden. Herkömmliche optische Inspektionsmethoden stoßen bei nicht transparenten Verpackungen an ihre Grenzen.

Alternativ kann die richtige Füllmenge in der Verpackung durch Verwendung von Waagen ermittelt werden. Herstellungsbedingt ergeben sich jedoch Schwankungen des Gewichts einzelner Produkte, welche insbesondere bei absorbierenden Hygieneprodukten im unteren zweistelligen Prozentsatz liegen können. Diese Schwankungen potenzieren sich durch das Gruppieren bzw. Zusammenfassen von mehreren Produkten in einer Verpackung, sodass ab einer gewissen Anzahl von gruppierten Produkten eine Fehlmenge in der Verpackung durch Wiegen nicht mehr sicher detektiert werden kann.

### AUFGABE UND LÖSUNG

Aufgabe der vorliegenden Erfindung ist es ein Verfahren zum Erfassen einer Anzahl an gruppierten Produkten zu beschreiben, welche eine schnelle und zuverlässige Erfassung ermöglicht, insbesondere auch von sich bereits in einer Verpackung befindlichen Produkten. Ein solches Verfahren kann auch als Vollständigkeitskontrolle bezeichnet werden.

Weitere Aufgabe der Erfindung ist es eine Vorrichtung zur Ausführung des Verfahrens und ein System zum Verpacken von Produkten mit einer solchen Vorrichtung zu schaffen, welche eine schnelle und zuverlässige Erfassung ermöglicht, insbesondere auch von sich bereits in einer Verpackung befindlichen Produkten.

Gelöst wird diese Aufgabe durch ein Verfahren zum Erfassen einer Anzahl an gruppierten Produkten, welche entlang einer Transportstrecke transportiert werden wie es nachfolgend beschrieben und beansprucht ist.

Es wurde erkannt, dass zu verpackende Produkte durch Ihren vorangehenden Herstellprozess eine Restwärme besitzen und erfindungsgemäß vorteilhaft die Wärmestrahlung der Produkte nach ihrer Gruppierung zur Bestimmung ihrer Anzahl erfasst und ausgewertet werden kann.

Das erfindungsgemäße Verfahren zum Erfassen einer Anzahl an gruppierten Produkten weist folgenden Schritte auf:
- Transportieren der gruppierten Produkte entlang einer Transportstrecke, wobei die Produkte gemeinsam als Einheit transportiert werden und dabei den Erfassungsbereich einer thermografischen Detektionseinrichtung passieren.
- Erzeugen eines Wärmebildes der gruppierten Produkte durch die thermografische Detektionseinrichtung. Die Detektionseinrichtung erfasst dabei die Wärmeemissionen der Produkte. Die Erfassung kann entweder während der Transportbewegung oder bei einem kurzzeitigen Stillstand erfolgen.
- Danach Auswertung des erzeugten Wärmebildes durch eine Datenverarbeitungseinheit mit einem Zählalgorithmus zur Bestimmung einer Anzahl von Wärmesignaturen, wobei je einem Produkt eine Wärmesignatur zugeordnet ist, und Rückschluss auf die Anzahl an Produkten.

Es wurde festgestellt, dass jedes Produkt auf Grund von vorangehendem Wärmeeintrag in seiner Verarbeitung, Bearbeitung und/oder seinem Transport eine charakteristische Wärmeverteilung über seine Oberfläche und/oder über seinem Querschnitt aufweist. So kann ein Produkt regelmäßig in seiner Mitte mehr und in seinen Außenbereichen weniger Wärmeenergie aufweisen und somit über eine individuelle Wärmesignatur verfügen. Basierend auf den erfassten Wärmesignaturen eines Wärmebildes kann somit über bildverarbeitende Zählalgorithmen die Anzahl der gruppierten Produkte ermittelt werden.

Umgeben der gruppierten Produkte mit einem Verpackungsmaterial ist vorteilhaft, da erst dann die Anzahl der gruppierten Produkte erfasst wird, wenn diese bereits verpackt sind und sich ihre Anzahl nicht mehr ändern kann. Es wird somit eine Kontrolle der fertig verpackten Produkte ermöglicht.

Das erfindungsgemäße Verfahren erlaubt in vorteilhafter Weise eine Verbesserung der Qualitätssicherung durch genaue und schnelle Erfassung von gruppierten Produkten.

In Weiterbildung des Verfahrens erfolgt ein zusätzlicher Schritt:
Abgleich des IST-Werts der Anzahl von Produkten mit einem vorgesehenen SOLL-Wert. Der SOLL-Wert kann dazu in der Datenverarbeitungseinheit hinterlegt bzw. in diese eingegeben bzw. eingelesen werden. Durch diesen zusätzlichen Verfahrensschritt kann ermittelt werden, ob eine Ansammlung von gruppierten Produkten vollständig ist.

In Weiterbildung des Verfahrens erfolgt ein zusätzlicher Schritt:
Auslösen einer Aktion abhängig von dem sich wie vorangehend beschrieben ergebenden Vergleichsergebnis, wobei wenn die IST-Anzahl der SOLL-Anzahl entspricht, die gruppierten Produkte weitertransportiert und/oder weiterverarbeitet werden, und wenn die IST-Anzahl nicht der SOLL-Anzahl entspricht, dann ein Ausschleusen oder Markieren der gruppierten Produkte erfolgt und/oder ein Kommunikationssignal ausgegeben wird. Das Markieren kann beispielsweise durch Bedrucken, insbesondere mittels Inkjetdrucker oder Laserdrucker, oder durch Etikettieren, insbesondere Aufbringen eines Labels bzw. Selbstklebeetiketts, erfolgen und ein späteres Ausschleusen oder Aussortieren ermöglichen. Das Kommunikationssignal kann ein optisches Signal, z.B. unter Verwendung einer Warnlampe, oder ein akustisches Signal, z.B. unter Ausgabe eines Warntons, jeweils als Hinweis an einen Maschinenbediener oder kann ein digitales an die Maschinensteuerung ausgegebenes Signal sein.

In einer Ausgestaltung des Verfahrens werden die gruppierten Produkte in eine Verpackung eingeführt.

Bei Durchführung des Verfahrens werden von der Detektionseinrichtung die Wärmeemissionen der Produkte durch das Verpackungsmaterial hindurch erfasst. Dafür ist es erforderlich, dass das Verpackungsmaterial zumindest teilweise "wärmedurchsichtig" ist, d.h. die Wärmemissionen der Produkte das Verpackungsmaterial in einem für die Detektionseinrichtung noch erfassbaren Maß durchdringen können.

Als Verpackungsmaterial können beispielsweise PE-Folien, andere Kunststoff- Folien, dünne Papierbahnen oder andere Zellstoffbahnen verwendet werden. Die Verpackungen könnten dann Beutel bzw. Taschen bzw. Tüten aus dem Material sein. Kommen "wärmeundurchsichtige" Verpackungsmaterialien zum Einsatz, so können darin Aussparungen oder Fenster aus "wärmedurchsichtigem" Verpackungsmaterial eingebracht sein.

In weiterer Ausgestaltung des Verfahrens sind die gruppierten Produkte geschichtet oder gestapelt. Bei derart gruppierten Produkten lässt sich mit klassischen Kameras und nachfolgender Bildauswertung nur schwer und mit Ungenauigkeiten behaftet die Anzahl an gruppierten Produkten ermitteln. Durch die erfindungsgemäße Verwendung einer thermografischen Detektionseinrichtung werden diese Herausforderungen gelöst, da einzelne Wärmesignaturen der jeweiligen Produkte in der Bildauswertung klar voneinander abgrenzbar sind.

In Ausgestaltung des Verfahrens handelt es sich bei den Produkten um absorbierende Hygieneprodukte, wie Windeln, Periodenprodukte, Inkontinenzeinlagen, Tücher oder WC-Papier.

In Ausgestaltung des Verfahrens weist die thermografische Detektionseinrichtung mindestens einen Infrarotsensor zur mindestens eindimensionalen Erfassung oder mindestens eine Wärmebildkamera zur zwei- oder dreidimensionalen Erfassung eines Wärmebildes auf, mit welcher die Wärmeemissionen der gruppierten Produkte gescannt werden. Ein Infrarotsensor zur eindimensionalen Erfassung kann als Zeilenkamera ausgeführt sein. Aus den eindimensionalen Bildzeilen der Zeilenkamera könnte dann wiederum ein 2D-Bild generiert werden. Merkmale der Wärmebildkamera wie Linse und Auflösung sowie ihre Entfernung zu den gruppierten Produkten liegen im Ermessen der Fachperson. Für den Zweck taugliche Wärmebildkameras sind im Markt frei verfügbar. Um die Qualität der Wärmebilder zu erhöhen, können auch mehrere Infrarotsensoren und/oder Wärmebildkameras in einer Detektionseinrichtung miteinander kombiniert werden.

In weiterer Ausgestaltung des Verfahrens ist ein vorgeschalteter Schritt vorgesehen, vor der Ausführung der anderen Verfahrensschritte im laufenden Betrieb:
Einstellen der Detektionseinrichtung, abhängig von den zu erfassenden Produkten und ggfs. ihrer Verpackung, insbes. ihrer Art, Geometrie, Materialgestaltung, etc.

Um die Wärmeemissionen der Produkte optimal erfassen zu können werden die Erfassungsparameter der Detektionseinrichtung eingestellt. Dies kann die Einstellung des Wellenbereiches umfassen, um beispielsweise sicher die Wärmeemissionen der transportierten Produkte und nicht die Wärmeemissionen eines die Produkte transportierenden Transportmittels z.B. Transportbandes zu erfassen. Dies kann auch die Einstellung des Fokus umfassen, um z.B. gezielt die Außenkanten des Produkts oder einen im Produkt liegenden Bereich zu erfassen.

In weiterer Ausgestaltung des Verfahrens ist ein vorgeschalteter Schritt vorgesehen, vor der Ausführung der anderen Verfahrensschritte im laufenden Betrieb:
Einlernen des Zählalgorithmus, auch bezeichnet als Teachen, insbesondere, indem einzelne Wärmesignaturen in einer Mehrzahl von Wärmebildern markiert werden. Alternativ bzw. zusätzlich kann die IST-Anzahl von Wärmesignaturen in einer Mehrzahl von Wärmebildern vorgegeben werden. Die Vorgabe der IST-Anzahl kann durch humane Erfassung mit Eingabe über ein Interface oder Kl-unterstützt erfolgen. Auch kann vorgegeben werden, wie einzelne Wärmesignaturen charakterisiert sind, z.B. durch eine Mindest- und Maximalzahl zusammenhängender Pixel einer Pixelkette, durch bestimmte Helligkeitswerte oder Kontrastverteilung von Pixelketten. Durch eine derartige Vorgabe von Charakteristika in einem bestimmten Point of Interest unter Ausgrenzung von irrelevanten Bildbereichen kann ein Produkt von einem benachbarten Produkt abgegrenzt werden. Nach erfolgtem Einlernen kann der Zählalgorithmus Wärmebilder mit Wärmesignaturen selbsttätig auswerten und die Anzahl von Produkten ermitteln.

Gemäß einem weiteren Aspekt betrifft die Erfindung auch eine Vorrichtung zum Erfassen einer Anzahl von gruppierten Produkten, insbesondere zur Ausführung des wie vorstehend beschriebenen Verfahrens. Die Vorrichtung verfügt über eine Transporteinrichtung zum Transport der gruppierten Produkte, eine thermografischen Detektionseinheit zum Erfassen eines Wärmebildes der gruppierten Produkte und eine Steuereinrichtung, welche datenübertragungstechnisch mindestens mit der thermografischen Detektionseinheit verbunden ist und eine Datenverarbeitungseinheit mit Zählalgorithmus zur Bestimmung der Anzahl von gruppierten Produkten besitzt. Die Elemente der Vorrichtung können dabei wie vorstehend bereits ausgeführt ausgestaltet sein.

In Weiterbildung der Vorrichtung ist die thermografische Detektionseinheit derart relativ zur Transportstrecke angeordnet, dass alle Produkte bei deren Transport den Erfassungsbereich der thermografischen Detektionseinrichtung passieren. Dazu ist eine optische Achse der Detektionseinheit winklig und nicht parallel zu oder in einer Ebene angeordnet, in welcher die Produkte gruppiert sind. Für flächig gestapelte Produkte gilt in anderen Worten: die optische Achse der Detektionseinheit ist nicht senkrecht zur flächigen Erstreckung der Produkte angeordnet. Die Anordnung der Detektionseinheit ergibt sich folglich durch die Ausrichtung der gruppierten Produkte zueinander. So wird in vorteilhafter Weise eine sichere Erfassung aller Produkte und eine korrekte Bestimmung ihrer Anzahl gewährleistet.

Gemäß einem weiteren Aspekt betrifft die Erfindung ein System zum Verpacken von Produkten mit einer Verpackungsmaschine zum Gruppieren und Verpacken der Produkte und einer wie vorstehend beschriebenen Vorrichtung.

Die Positionierung der Detektionseinrichtung in einem solchen System hängt dabei ab von deren Ausprägung, der Ausgestaltung des Systems, den Eigenschaften der Produkte und dem Verpackungsprozess. Bei der Verpackung z.B. von Windeln, Slipeinlagen, Toilettenrollen, Binden, Tüchern etc.in Beutel kann eine Wärmebildkamera vor oder nach einer Verschließstation zum Verschließen des Beutels, z.B. durch Verschweißen des Beutels, angeordnet sein.

In letztgenanntem Fall könnte die Wärmebildkamera auch die im Beutel erzeugte Siegelnaht erfassen und könnte durch eine nachfolgende Bildauswertung die Siegelqualität des Verschließprozesses kontrolliert werden.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### KURZBESCHREIBUNG DER ZEICHNUNGEN

Die Erfindung soll anhand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1: eine Vorrichtung zum Erfassen einer Anzahl von gruppierten Produkten
- Fig. 2: ein beispielhaftes Wärmebild von gruppierten Produkten
- Fig. 3a und b: Anordnungsmöglichkeiten von Detektionseinrichtungen relativ zu den gruppierten Produkten
- Fig. 4: ein System zum Verpacken von Produkten

### DETAILLIERTE BESCHREIBUNG DER AUSFÜHRUNGSBEISPIELE

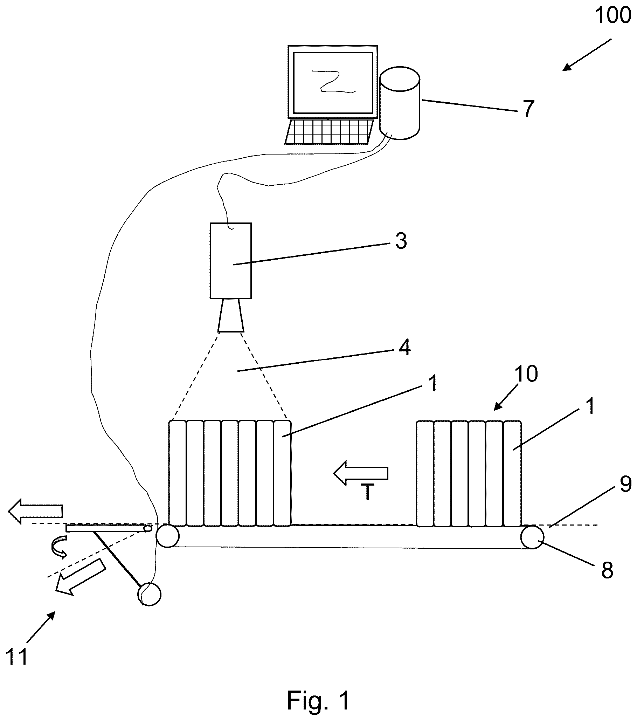

Fig. 1 zeigt eine Vorrichtung zum Erfassen einer Anzahl von gruppierten Produkten.

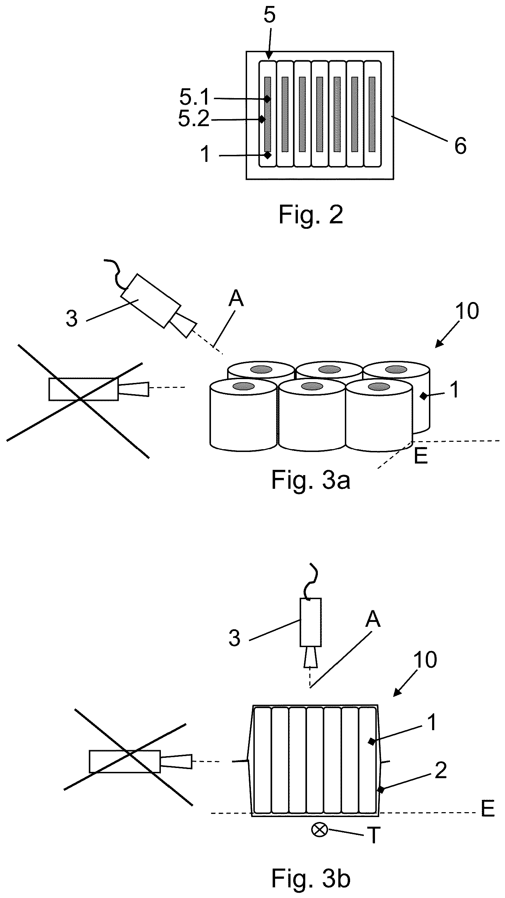

Die Vorrichtung 100 zum Erfassen einer Anzahl von gruppierten Produkten 10 besitzt eine thermografischen Detektionseinheit 3 zum Erfassen eines Wärmebildes 6 (vgl. Fig. 2) der gruppierten Produkte 10. Die thermografische Detektionseinrichtung 3 weist in der dargestellten Ausführungsform eine Wärmebildkamera auf. Die einzelnen Produkte 1 sind zu Stapeln zusammengefasst, als gruppierte Produkte 10. Bei den Produkten 1 handelt es sich um absorbierende Hygieneprodukte, wie z.B. Windeln.

Die Vorrichtung besitzt weiter eine Transporteinrichtung 8 zum Transport der gruppierten Produkte 10 in einer Transportrichtung T. In Transportrichtung T schließt sich an das Förderband der Transporteinrichtung 8 eine Ausschleuseinrichtung mit Weiche 11 an, zum Ausschleusen von gruppierten Produkten 10. Die in Transportrichtung gesehen stromabwärtigen gruppierten Produkte 10 bestehen aus sieben Einzelprodukten. Die in Transportrichtung gesehen stromaufwärtigen gruppierten Produkte 10 bestehen aus sechs Einzelprodukten.

Die thermografische Detektionseinheit 3 ist datenübertragungstechnisch verbunden mit einer Steuereinrichtung 7. Die Steuereinheit 7 umfasst eine Datenverarbeitungseinheit mit Zählalgorithmus zur Bestimmung der Anzahl von gruppierten Produkten. Die Erfassung einer Anzahl an gruppierten Produkten 10 geschieht dabei wie folgt:
Die gruppierten Produkte 10 werden entlang einer Transportstrecke 9 transportiert, wobei die Produkte 1 dabei den Erfassungsbereich 4 der thermografischen Detektionseinrichtung 3 passieren. Durch die thermografische Detektionseinrichtung 3 wird dabei ein Wärmebild 6 der gruppierten Produkte 10 erzeugt. Zur Auswertung des Wärmebildes 6 werden die Bilddaten an die Datenverarbeitungseinheit 7 übermittelt. Durch einen Zählalgorithmus der Datenverarbeitungseinheit 7 erfolgt eine Bestimmung der Anzahl von Wärmesignaturen 5, (vgl. Fig. 2) wobei je einem Produkt 1 eine produktspezifische Wärmesignatur 5 zugeordnet ist, was wiederum den Rückschluss auf die Anzahl an Produkten erlaubt.

Nachfolgend wird der IST-Wert der Anzahl von Produkten 1 mit einem vorgesehenen SOLL-Wert abgeglichen. Abhängig vom Vergleichsergebnis wird eine Aktion ausgelöst, wobei wenn die IST-Anzahl der SOLL-Anzahl entspricht, die gruppierten Produkte 10 weitertransportiert und/oder weiterverarbeitet werden, und wenn die IST-Anzahl nicht der SOLL-Anzahl entspricht, ein Ausschleusen der gruppierten Produkte 10 durch die Ausschleuseinrichtung 11 erfolgt, welche dazu von der Steuereinheit 7 entsprechend angesteuert wird. Entspricht die SOLL-Anzahl zum Beispiel sechs Produkte, so werden die stromabwärtigen sieben gruppierten Produkte 10 ausgeschleust.

Fig. 2 zeigt ein beispielhaftes Wärmebild von gruppierten Produkten. Jedem Produkt 1 ist eine Wärmesignatur 5 des Wärmebildes 6 zugeordnet. Eine jeweilige Wärmesignatur 5 verfügt über charakteristische Merkmale, nämlich hier beispielhaft und exemplarisch einen dunklen Pixelbereich 5.1 und einen hellen Pixelbereich 5.2 besitzt, welche jeweils wiederum durch eine bestimmte Anzahl von Pixeln gekennzeichnet sind.

Fig. 3a und b zeigen Anordnungsmöglichkeiten von Detektionseinrichtungen relativ zu den gruppierten Produkten.

Grundsätzlich ist die thermografische Detektionseinrichtung 3 derart angeordnet, dass alle Produkte 1 bei deren Transport den Erfassungsbereich 4 der thermografischen Detektionseinrichtung 3 passieren.

In Fig. 3a wurden sechs Klopapierrollen in einer 3x2 Matrix in einer Gruppierungsebene E gruppiert.

In Fig. 3b wurden sieben Windeln in einer Gruppierungsebenen E hochkant gestapelt. Die Windeln wurden mit einem Verpackungsmaterial 2 umgeben werden oder in eine beutelförmige Verpackung 2 eingeführt und diese dann verschlossen. Die so gruppierten und verpackten Produkte 1 können in Transportrichtung T (senkrecht zur Bildebene) unter einer Detektionseinrichtung mit Wärmebildkamera 3 hindurchgeführt werden.

Beiden dargestellten Anordnungen der Detektionseinrichtung 3 von Fig. 3a und 3b ist gemein, dass eine optische Achse A der Detektionseinrichtung 3 winklig und nicht parallel zu oder in der Gruppierungsebene E liegt, in welcher die Produkte gruppiert sind.

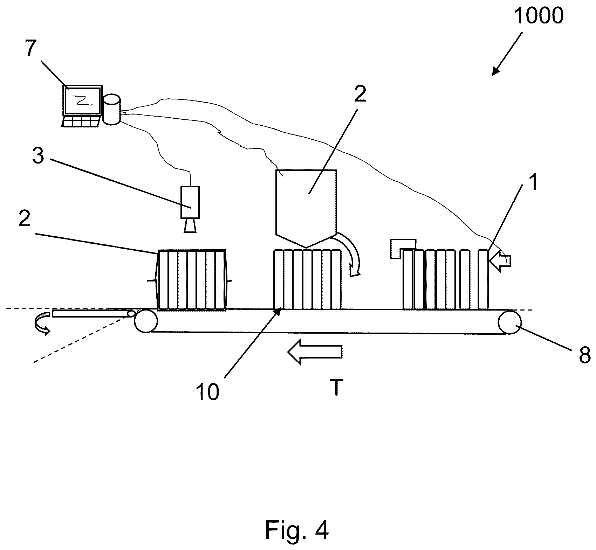

Fig. 4 zeigt ein System zum Verpacken von Produkten.

Das System 1000 zum Verpacken von Produkten 1 besitzt - in Transportrichtung T gesehen - eine Verpackungsmaschine zum Gruppieren von Produkten mit einer Einrichtung, um einzelnen Produkte 1 zu gruppierten Produkten 10 zusammenzufassen, und zum Verpacken der gruppierten Produkte 10 in eine Verpackung 2 sowie eine wie vorstehend detailliert beschriebene Vorrichtung 100 zum Erfassen einer Anzahl von gruppierten Produkten 10.

### Bezugszeichenliste

- 1: Produkt
- 2: Verpackungsmaterial / Verpackung
- 3: thermografische Detektionseinrichtung
- 4: Erfassungsbereich
- 5: Wärmesignatur
- 5.1: dunklerer Pixelbereich
- 5.2: hellerer Pixelbereich
- 6: Wärmebild
- 7: Steuereinrichtung mit Datenverarbeitungseinheit und Maschinensteuerung
- 8: Transporteinrichtung
- 9: Transportstrecke
- 10: gruppierte Produkte
- 11: Ausschleuseinrichtung

- 100: Vorrichtung zum Erfassen von Produkten
- 1000: System zum Verpacken von Produkten

- A: optische Achse
- E: Gruppierungsebene
- T: Transportrichtung

## Patentansprüche

1. Verfahren zum Erfassen einer Anzahl an gruppierten Produkten (10) mit folgenden Schritten:
a) Umgeben der gruppierten Produkte (10) mit einem Verpackungsmaterial (2)
b) Transportieren der gruppierten Produkte (10) entlang einer Transportstrecke (9), wobei die Produkte (1) dabei den Erfassungsbereich (4) einer thermografischen Detektionseinrichtung (3) passieren
c) Erzeugen eines Wärmebildes (6) der gruppierten Produkte (10) durch die thermografische Detektionseinrichtung (3)
d) Auswertung des Wärmebildes (6) durch eine Datenverarbeitungseinheit (7) mit einem Zählalgorithmus zur Bestimmung einer Anzahl von Wärmesignaturen (5), wobei je einem Produkt (1) eine Wärmesignatur (5) zugeordnet ist, und Rückschluss auf die Anzahl an Produkten.

2. Verfahren nach Anspruch 1 mit dem zusätzlichen Schritt:
e) Abgleich des IST-Werts der Anzahl von Produkten (1) mit einem vorgesehenen SOLL-Wert.

3. Verfahren nach Anspruch 2 mit dem zusätzlichen Schritt:
f) Auslösen einer Aktion abhängig vom Vergleichsergebnis, wobei wenn die IST-Anzahl der SOLL-Anzahl entspricht, die gruppierten Produkte (10) weitertransportiert und/oder weiterverarbeitet werden, wenn die IST-Anzahl nicht der SOLL-Anzahl entspricht ein Ausschleusen oder Markieren der gruppierten Produkte (10) erfolgt und/oder ein Signal ausgegeben wird.

4. Verfahren nach einem der vorangehenden Ansprüche, wobei in dem Schritt a) die gruppierten Produkte (10) in eine Verpackung eingeführt werden.

5. Verfahren nach einem der vorangehenden Ansprüche, wobei die gruppierten Produkte (10) geschichtet oder gestapelt sind und/oder es sich bei den Produkten (1) um absorbierende Hygieneprodukte handelt.

6. Verfahren nach einem der vorangehenden Ansprüche, wobei die thermografische Detektionseinrichtung (3) mindestens einen Infrarotsensor oder mindestens eine Wärmebildkamera aufweist.

7. Verfahren nach einem der vorangehenden Ansprüche, mit dem vorgeschalteten Schritt:
- Einlernen des Zählalgorithmus.

8. Vorrichtung (100) zum Erfassen einer Anzahl von gruppierten Produkten (10), insbesondere zur Ausführung des Verfahrens nach einem der vorangehenden Ansprüche, mit einer Transporteinrichtung (8) zum Transport der gruppierten Produkte (10), einer thermografischen Detektionseinrichtung (3) zum Erfassen eines Wärmebildes (6) der gruppierten Produkte (10) und einer Steuereinrichtung (7), welche datenübertragungstechnisch mindestens mit der thermografischen Detektionseinheit (3) verbunden ist und über eine Datenverarbeitungseinheit mit Zählalgorithmus zur Bestimmung der Anzahl von gruppierten Produkten (10) verfügt.

9. Vorrichtung nach Anspruch 8, **dadurch gekennzeichnet, dass** die thermografische Detektionseinrichtung (3) derart angeordnet ist, dass alle Produkte (1) bei deren Transport den Erfassungsbereich (4) der thermografischen Detektionseinrichtung (3) passieren.

10. System (1000) zum Verpacken von Produkten (1) mit einer Verpackungsmaschine zum Gruppieren und Verpacken der Produkte (1) und einer Vorrichtung (10) nach Anspruch 8 oder 9.
